# EUROPÄISCHE PATENTSCHRIFT

(11) **EP 3 716 828 B1**
(45) Veröffentlichungstag und Bekanntmachung des Hinweises auf die Patenterteilung: **05.01.2022**
(21) Anmeldenummer: 18807939.6
(22) Anmeldetag: 21.11.2018
(51) Int. Cl.: A47J 43/07, A47G 19/12, B65D 47/06

(54) **GEFÄSSDECKEL, INSBESONDERE FÜR EINEN MIXER**
VESSEL LID, PARTICULARLY FOR A MIXER
COUVERCLE DE RÉCIPIENT, EN PARTICULIER POUR UN MÉLANGEUR

(30) Priorität: 27.11.2017 DE 102017221176
(43) Veröffentlichungstag der Anmeldung: 07.10.2020
(73) Patentinhaber: BSH Hausgeräte GmbH, 81739 München (DE)
(72) Erfinder: KRÜGER, Tobias, 80639 München (DE); LENG, Sascha, 80339 München (DE); BÜRZLE, Sonja, 89257 Illertissen (DE)
(86) Internationale Anmeldenummer: PCT/EP2018/082031
(87) Internationale Veröffentlichungsnummer: WO 2019/101779

(56) Entgegenhaltungen:
- EP-A1- 1 479 947
- WO-A1-2016/144711
- US-B1- 9 039 274
- US-B2- 8 702 300
- US-B2- 8 919 590

## Beschreibung

### Gebiet der Erfindung

Die Erfindung betrifft einen Deckel für ein Gefäß, insbesondere für einen Mixer, aufweisend mindestens eine in einer Deckelbasis befindlichen Ausgussöffnung, durch welche ein Inhalt des Gefäßes aus dem Gefäß durch die Deckelbasis hindurch ausgegossen werden kann, und einen Ausgussverschluss, welcher zum Abdichten der Ausgussöffnung in diese einsteckbar ausgebildet ist. Die Erfindung betrifft außerdem ein Mixgefäß mit dem Deckel.

### Hintergrund der Erfindung

Dickwandige Aufbewahrungsbehältnisse für Nahrungsmittel in Form von Kannen, Karaffen, Schüsseln oder Krügen aus Glas, Steingut oder Porzellan neigen in der Regel aufgrund der zugrundeliegenden Produktionsverfahren zu einem unerwünschten Ausguss-und Abtropfverhalten. Die durch den Guss oder die Herstellung in einem Ofen entstehenden abgerundeten Kanten sind zwar erwünscht, um die Verletzungsgefahr durch Schnittverletzungen auszuschließen, jedoch neigen die bewusst rund gehaltenen Kanten dazu, dass eine aus diesen Gefäßen ausfließende Flüssigkeit nicht an einer Kante abreißt, sondern an ihr entlang fließt. In der Folge kann es im Extremfall passieren, dass die auszugießende Flüssigkeit nicht aus dem Gefäß in ein anderes Gefäß unterhalb des Gefäßrandes fließt, sondern an der Außenwand entlang bis zum Boden des Ausgussgefäßes entlang läuft.

Für Glasmixgetränke ist es bekannt, diese mit einem Stopfen mit Öffnung zu versehen, der selbst eine scharfe Ausgusskante aufweist und somit die Gefäßöffnung ersetzt. In dem deutschen Gebrauchsmuster DE 20 2011 102 749 U1 wird eine auf ein Dekantiergefäß oder eine Karaffe aufbringbare Vorrichtung zum Belüften und/oder Ausgießen von Wein offenbart. Diese Belüftungsvorrichtung dient vor allem dazu, die in frisch entkorktem Wein noch vorhandenen Phenole der Weingärung durch Belüftung zu entfernen. Dadurch verbessert sich der Geschmack des Weines, weil die sehr herben Bitterstoffe des frisch entkorkten Weines durch deren hohen Dampfdruck beim Entlüften entweichen. Als Nebeneffekt weisen diese Belüftungsvorrichtungen eine Dekantierkante auf, über die sich der frisch belüftete Wein in ein Glas gießen lässt. Nachteilig an diesen Belüftungsvorrichtungen ist, dass die belüfteten Strömungshindernisse bei Verwendung mit dickflüssigen Mixgetränken, wie Smoothies (dickflüssige, pürierte Früchte) oder Milchshakes (teilgefrorene Milchmixgetränke) schnell verstopfen oder sich auch an den Strömungshindernissen nur schwer reinigen lassen.

Die zuvor genannte Problematik ist häufig auch bei Glasmixern beobachtbar. Glasmixer bestehen aus einer Glaskaraffe oder einem Glaskrug, der am Boden eine abdichtbare Öffnung zur Aufnahme eines motorisch angetriebenen Messersterns. Aufweist. Um die hohen Kräfte beim Mixen aufnehmen zu können, aber auch, um als stabiler Krug verwendet werden zu können, weisen diese Glasmixer eine vergleichbar hohe Wandstärke auf, die beim Brennen in einem Ofen eine runde Gießkante ausbilden. Beim Umgießen des gemixten Getränks aus dem Mixer ist es notwendig, Geschick anzuwenden, damit das Mixgetränk nicht an der Außenwand des Mixers entlang läuft.

Ein Mixer mit einem Gefäß und einem Deckel mit einem randseitigen Ausguss und Ausgussverschluss ist aus der Patentschrift US 8,702,300 B2 bekannt.

### Der Erfindung zugrundeliegende Aufgabe

Aufgabe der Erfindung ist es daher, eine Vorrichtung zur Verfügung zu stellen, welche die Ausgießproblematik verringert. Insbesondere soll ein verbesserter Deckel für ein Gefäß, insbesondere für einen Mixer bereitgestellt werden, sowie ein Mixgefäß mit dem Deckel.

### Erfindungsgemäße Lösung

Die Bezugszeichen in sämtlichen Ansprüchen haben keine einschränkende Wirkung, sondern sollen lediglich deren Lesbarkeit verbessern.

Die der Erfindung zu Grunde liegende Aufgabe wird durch einen Deckel für ein Gefäß, insbesondere für einen Mixer gelöst, bei dem vorgesehen ist, dass die Ausgussöffnung unter Bildung eines geschlossenen Deckelbasisumfangs bis zum Gefäßrand reicht wobei der Übergang von der Ausgussöffnung über den geschlossenen Deckelbasisumfang eine Ausgusskante bildet.

Außerdem wird die Erfindungsaufgabe durch ein Gefäß mit einem solchen Deckel gelöst. Nach der Erfindung ist also vorgesehen, einen Deckel für ein Gefäß, insbesondere für einen Mixer, mit einer Ausgussöffnung zur Verfügung zu stellen. Dabei ist vorgesehen, dass der Deckel zweiteilig ausgebildet ist. Zum einen weist der Deckel eine Deckelbasis auf, die eine Ausgussöffnung aufweist. Diese Ausgussöffnung ist mit einem Ausgussverschluss verschließbar. Die Ausgussöffnung ragt dabei bis fast zum Gefäßrand, jedoch bildet die Deckelbasis einen geschlossenen Deckelbasisumfang. Es ist also nicht vorgesehen, dass die Deckelbasis eine seitliche Ausnehmung aufweist, so dass die in dem Gefäß oder in dem Mixer vorhandene Flüssigkeit über die Gefäßkante herausfließt, sondern es ist vorgesehen, dass der schmale Übergang von der Ausgussöffnung bis hin zum Rand der Deckelbasis aus dem Material der Deckelbasis besteht. Dieser schmale Rand der Deckelbasis weist eine scharfe Abrisskante oder Ausgusskante für die auszugießende Flüssigkeit auf.

Der zweite Teil des Deckels weist in Ausgestaltung der Erfindung einige Besonderheiten auf.

Es ist nach dieser ersten Ausgestaltung der Erfindung vorgesehen, dass der Ausgussverschluss als Wippe mit zwei Schenkeln ausgebildet ist, wobei unterhalb des Scheitelpunktes der Wippe ein nach oben geöffneter und in die Wippe integrierter Messbecher angeordnet ist, und wobei ein erster Schenkel im Verschlusszustand des Deckels die Ausgusskante überdeckt, und wobei ein zweiter Schenkel im Verschlusszustand unter Ausbildung eines Öffnungskeils in die Höhe ragt, so dass durch Druck auf den in die Höhe ragenden zweiten Schenkel die Wippe den ersten Schenkel hebt, so dass die Ausgussöffnung offen ist. Der Ausgussverschluss weist somit eine Mehrfachfunktion auf. Zunächst ist der Ausgussverschluss als Messbecher ausgeführt. Mit dieser Funktion wirkt der Ausgussverschluss wie ein in das Gefäß oder in den Mixer wirkender Stempelt, mit zum Beispiel längliche Früchte beim Mixen in das rotierende Messer gedrückt werden können. Dabei verschließt der Messbecher den Zugang zum Mixer, so dass zur Sicherung des Bedieners keine Finger in den Mixer gesteckt werden können. Des Weiteren können mit dem Messbecker Zucker, Sirup, Likör, Soßen und/oder Gewürze in den Mixer gegossen oder geschüttet werden. Die wippenartige Anordnung mit dem Messbecher unterhalb des Scheitelpunktes der Wippe hat zur Folge, dass die Wippe mit dem Messbecher in der Öffnung steckt. Wird der erste Schenkel heruntergedrückt, so legt sich der Schenkel auf die bis nahe zum Gefäßrand reichende Ausgusskante und dichtet diese ab. Dabei ragt der zweite Schenkel, der dem ersten Schenkel gegenüber angeordnet ist, in die Höhe. Durch Druck auf den in die Höhe ragenden Schenkel mit dem Finger wippt die Wippe und dreht dabei den in die Ausgussöffnung ragenden Messbecher und hebt den ersten Schenkel an, der dadurch die mit der Ausgussöffnung verbindende Ausgusskante öffnet und freigibt. Dadurch kann nun das Mixgetränk durch dies Deckelbasis hindurch ausgegossen werden.

In einer weiteren Ausgestaltung der Erfindung kann vorgesehen sein, dass der Deckel außer dem Ausgussverschluss, dass die Deckelbasis einteilig und flexibel ausgebildet ist. In bevorzugter Weise kann die Deckelbasis aus Kunstkautschuk, aus Weichplastik oder aus Silikon gegossen oder geformt sein. Die flexible Form hat zum Vorteil, dass die in der Regel dickwandigen Gefäße, die beim Brennen im Ofen eine gewisse Formvarianz aufweisen, sicher verschlossen werden können, ohne dass der Formschluss wegen Passungenauigkeit leistet. Zur besseren Sitz der Deckelbasis in der Öffnung des Gefäßes können auch eventuell vorhandene um den Deckelbasisumfang angeordnete Dichtungslippen vorhanden sein, welche unter einem Presssitz die Deckelbasis Gefäß verankern. Die Dichtungslippen lassen sich leicht verformen und gleichen so auch eine gewisse Toleranz der Gefäßmaße aus. Dabei hat es sich als vorteilhaft erwiesen, wenn um den Deckelbasisumfang mindestens eine, bevorzugt drei untereinander angeordnete Dichtungslippen vorhanden sind, welche unter einem Presssitz die Deckelbasis im Gefäß verankern.

In noch weiterer Ausgestaltung der Erfindung kann vorgesehen sein, dass der erste Schenkel löffelförmig ausgebildet ist, wobei die im Wesentlichen konvexe Unterseite des Löffels im Verschlusszustand formschlüssig in der Ausgussöffnung aufgenommen ist und die im Wesentlichen konkave Oberseite des Löffels eine Löffelschale bildet. Die konvexe Unterseite dieses Löffels hilft, die in die Ausgusskante übergehende Ausgussöffnung besser zu verschließen, so dass keine im Gefäß schwappende oder schleudernde Flüssigkeit zwischen Ausguss-kante und Verschluss herausdrängt. Des Weiteren können mit dem ausgebildeten Löffel Zucker, Gewürze oder würzende Flüssigkeiten portioniert werden.

In noch weiterer Ausgestaltung des Deckels kann vorgesehen sein, dass die Oberfläche der Deckelbasis konkav geformt ist. Dies hat den Vorteil, dass beim Mixen aus der Öffnung geringfügig herausgespritzte oder beim Einfüllen nicht ganz zielgenau positionierte Flüssigkeit wieder durch die Ausgussöffnung in das Gefäß zurückfließt.

Das bevorzugte Gefäß ist ein Gefäß eines Mixers, besonders vorzugsweise eines Standmixers. Das Gefäß kann aber zum Beispiel auch das Mixgefäß eine Küchenmaschine sein, die eine Kupplungsstelle für ein Mixgefäß aufweist. Das bevorzugte Gefäß hat an seinem oberen Rand eine Wandstärke von mindestens 1 mm (Millimeter), besonders vorzugsweise mindestens 2 mm, besonders vorzugsweise mindestens 3 mm, besonders vorzugsweise mindestens 4 mm, besonders vorzugsweise mindestens 5 mm. Besonders vorzugsweise hat das gesamte Mixgefäß eine Wandstärke von mindestens 1 mm (Millimeter), besonders vorzugsweise mindestens 2 mm, besonders vorzugsweise mindestens 3 mm, besonders vorzugsweise mindestens 4 mm, besonders vorzugsweise mindestens 5 mm. Das bevorzugte Gefäß besteht, abgesehen von seinem Sockel und, in manchen Ausführungsformen seinem Griff, im Wesentlichen aus Glas.

Der bevorzugte Deckel kann so auf dem Gefäß angebracht werden, dass die Ausgusskante gerade gegenüberliegend von dem Griff des Gefäßes angeordnet ist, um ein bequemes Ausgießen zu ermöglichen. Hierbei meint "gegenüberliegend" die von dem Griff wegweisende Seite des Gefäßes, auf der bei gewöhnlichem Gebrauch der Inhalt des Gefäßes ausgegossen oder ausgeschüttet wird.

### Kurzbeschreibung der Zeichnungen

Weitere vorteilhafte Ausgestaltungen werden nachfolgend anhand mehrerer in den Zeichnungen dargestellten Ausführungsbeispielen, auf welche die Erfindung jedoch nicht beschränkt ist, näher beschrieben.

Es zeigt schematisch:
- Figur 1: den erfindungsgemäßen Deckel in einer Explosionsdarstellung,
- Figur 2: den Deckel aus Figur 1 in einer perspektivischen Ansicht,
- Figur 3: den Deckel aus Figur 2, jedoch im Verschlusszustand,
- Figur 4: den Deckel aus Figur 3 im geöffneten Zustand, und
- Figur 5: den erfindungsgemäßen Deckel im Einsatz auf deinem Mixgefäß.

### Detaillierte Beschreibung von Ausführungen der Erfindung

Bei der nachfolgenden Beschreibung von bevorzugten Ausführungsformen der vorliegenden Erfindung bezeichnen gleiche Bezugszeichen gleiche oder vergleichbare Komponenten.

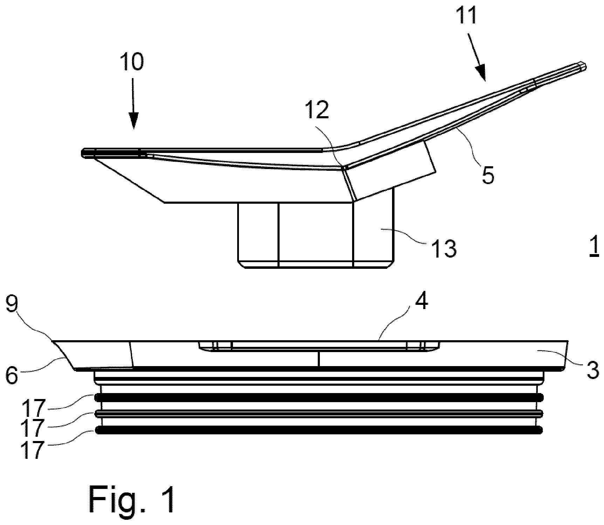

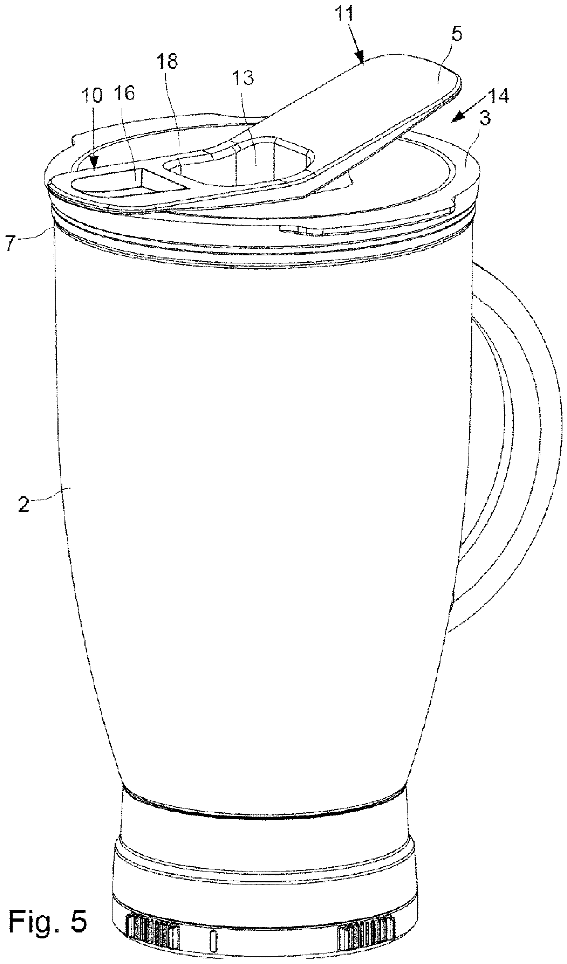

In Figur 1 ist ein erfindungsgemäßer Deckel 1 in einer Explosionsdarstellung dargestellt, wobei der Deckel 1 zum Verschluss eines Gefäßes, insbesondere eines Mixers 2 (Figur 5) aus einer Deckelbasis 3 mit darin befindlicher Ausgussöffnung 4 und einem Ausgussverschluss 5 besteht. Deckelbasis 3 und der Ausgussverschluss können aus zwei verschiedenen Materialien bestehen, wie z. B. Weichplastik, Kunstkautschuk oder Silikon für die Deckelbasis 3 und Polystyrol, ABS oder Acryl für den Ausgussverschluss 5. In dieser Ausgestaltung der Erfindung ist vorgesehen, dass der Ausgussverschluss 5 zum Abdichten der Ausgussöffnung 4 in diese einsteckbar ausgebildet ist. Dabei ist des Weiteren in dieser Ausgestaltung des Deckels 1 vorgesehen, dass die Ausgussöffnung 4 unter Bildung eines geschlossenen Deckelbasisumfangs 6 bis zum Gefäßrand 7 (Figur 5) reicht wobei der Übergang 8 von der Ausgussöffnung 4 über den geschlossenen Deckelbasisumfang 6 eine Ausgusskante 9 bildet. Der Ausgussverschluss 4 weist eine Wippenform mit zwei Schenkeln 10 und 11 auf. Dabei befindet sich unterhalb des Scheitelpunktes der Wippe ein Messbecher 13, der als Stempel in die Ausgussöffnung 4 geschoben wird, um die Deckelbasis 3 dicht zu Verschließen. Für den Verschluss des Gefäßes 2 wird die Deckelbasis 3 mit den sie umgebenden Dichtungslippen 17 in die Gefäßöffnung gesteckt.

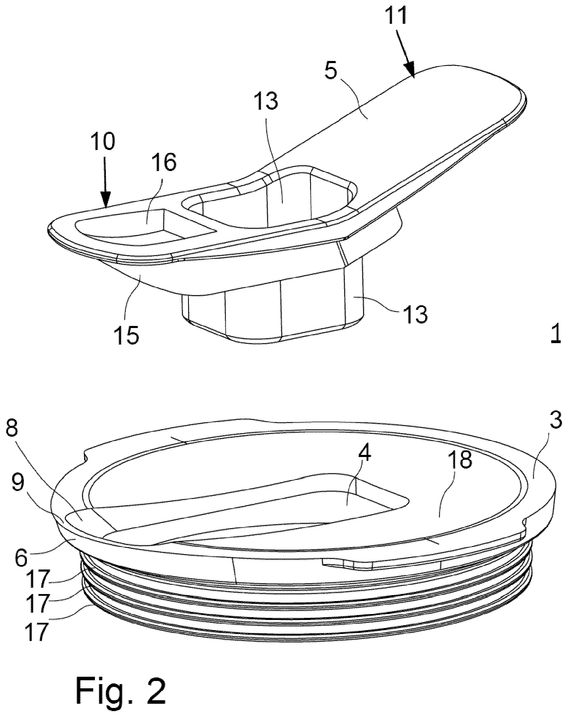

In Figur 2 ist der Deckel aus Figur 1 in einer perspektivischen Ansicht dargestellt. Der linke, erste Schenkel 10 ist löffelförmig ausgebildet. Die im Wesentlichen konvexe Unterseite 15 des Löffels ist im Verschlusszustand formschlüssig in der Ausgussöffnung 4 aufgenommen, was durch eine korrespondierende Form ermöglicht wird, in welcher die Unterseite des Löffels wie in eine Form passt, die durch die Ausgussöffnung 4 und Ausgusskante 9 gebildet wird. Die im Wesentlichen konkave Oberseite 16 des Löffels bildet hingegen eine Löffelschale, mit der Zucker, Gewürze, Öle oder würzende Flüssigkeiten aus einem Vorratsbehältnis entnommen und in die Ausgussöffnung 4 beim Mixen geschüttet werden können. Es ist in dieser Ansicht ersichtlich, dass in dieser Ausgestaltung die Oberfläche 18 der Deckelbasis konkav geformt ist, wobei die Ausgussöffnung 4 im bestimmungsgemäßen Gebrauch des Deckels 4 als tiefst liegende Stelle ausgebildet ist. Aus der Ausgussöffnung 4 beim Mixen geringfügig herausgespritzte Flüssigkeit oder Brei fließt durch diese konkave Formgebung wieder in das Gefäß 2 zurück.

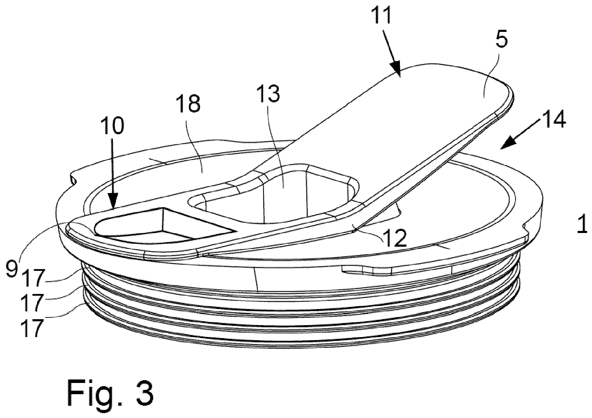

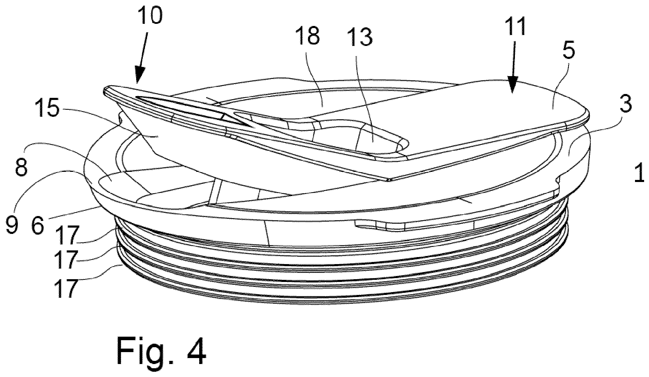

Zur Verdeutlichung der Öffnungsfunktion ist in Figur 3 der Deckel 1 in seinem verschlusszustand dargestellt. Der Ausgussverschluss verschließt also nicht nur die Ausgussöffnung 4 durch Hineinstecken des Messbechers 13, sondern wahlweise auch noch die Ausgusskante 9, in dem der Schenkel 10 durch entsprechenden Formschluss die Ausgusskante 9 verschließt. In dieser Stellung der Ausgussverschlusses 5 ragt der zweite Schenkel 11 in die Höhe und bildet dabei einen Öffnungskeil 14. Durch manuellen Druck auf den in die Höhe ragenden Schenkel 11, wippt der Ausgussverschluss über seinen Scheitelpunt 12 mit dem Messbecher 13 in der Ausgussöffnung 4, so dass sich der erste Schenkel 10 anhebt, wie es in Figur 4 dargestellt ist. Dabei legt der Schenkel 10 die Ausgusskante 9 frei und Flüssigkeit kann aus dem Inneren vorbei an dem Messbecher 13 über die Aus-gusskante 9 herausfließen. Beim Ausgießen verhindern die Dichtungslippen 17, die unter Eigenverformung die Deckelbasis 3 mit dem Mixer 2 verbinden, dass Flüssigkeit an der Deckelbasis vorbei fließt.

In Figur 5 ist schließlich der erfindungsgemäße Deckel 1 im bestimmungsgemäßen Gebrauch als Aufsatz auf ein Gefäß 2 eines Mixers dargestellt. Das Gefäß besteht abgesehen von seinem Sockel aus Glas. Die durch den Ausgussverschluss 4 geschlossene Ausgusskante 9 reicht hier bis nahe an den Gefäßrand 7 des Gefäßes 2 des Mixers, so dass der Mixer betrieben werden kann, ohne dass Flüssigkeit aus dem Mixer herausspritzt. Zum Handhaben des Gefäßes ist es mit einem ebenfalls gläsernen Griff ausgestattet. Der Deckel kann so auf dem Gefäß angebracht werden, dass die Ausgusskante 9 gerade gegenüberliegend von dem Griff angeordnet ist, um ein bequemes Ausgießen zu ermöglichen.

Das typische Gefäß weist einen Sockel, gewöhnlich aus Kunststoff oder aus einem Metall auf, in dem ein Werkzeug (nicht dargestellt) untergebracht ist, das in das Innere des Gefäßes hineinragt. Das Werkzeug weist vorzugsweise ein oder mehrere Messer auf, um Mixgut in dem Mixer zu zerkleinern. Außerdem ist das bevorzugte Werkzeug mit einer Welle ausgestattet, über die das Werkzeug von einem Motor des Mixers oder einer Küchenmaschine (ebenfalls nicht dargestellt) rotierend angetrieben werden kann.

### Bezugszeichenliste

- 1: Deckel
- 2: Gefäß
- 3: Deckelbasis
- 4: Ausgussöffnung
- 5: Ausgussverschluss
- 6: Deckelbasisumfang
- 7: Gefäßrand
- 8: Übergang
- 9: Ausgusskante
- 10: erster Schenkel
- 11: zweiter Schenkel
- 12: Scheitelpunkt
- 13: Messbecher
- 14: Öffnungskeil
- 15: konvexe Unterseite
- 16: konkave Oberseite
- 17: Dichtungslippe
- 18: Oberseite

## Patentansprüche

1. Deckel (1) für ein Gefäß, insbesondere für einen Mixer (2), aufweisend
- mindestens eine in einer Deckelbasis (3) befindliche Ausgussöffnung (4), durch welche ein Inhalt des Gefäßes aus dem Gefäß durch die Deckelbasis (3) hindurch ausgegossen werden kann, und
- einen Ausgussverschluss (5), welcher zum Abdichten der Ausgussöffnung (4) in diese einsteckbar ausgebildet ist,
- die Ausgussöffnung (4) unter Bildung eines geschlossenen Deckelbasisumfangs (6) bis zum Gefäßrand (7) reicht, wobei der Übergang (8) von der Ausgussöffnung (4) über den geschlossenen Deckelbasisumfang (6) eine Ausgusskante (9) bildet,
**dadurch gekennzeichnet, dass** der Ausgussverschluss (5) als Wippe mit zwei Schenkeln (10, 11) ausgebildet ist,
- unterhalb des Scheitelpunktes (12) der Wippe ein nach oben geöffneter und in die Wippe integrierter Messbecher (13) angeordnet ist, und wobei
- ein erster Schenkel (10) im Verschlusszustand des Deckels (1) die Ausgusskante (9) überdeckt, und wobei
ein zweiter Schenkel (1) im Verschlusszustand unter Ausbildung eines Öffnungskeils (14) in die Höhe ragt, so dass durch Druck auf den in die Höhe ragenden zweiten Schenkel (11) die Wippe den ersten Schenkel (10) hebt, so dass die Ausgussöffnung (4) offen ist.

2. Deckel nach Anspruch 1, **dadurch gekennzeichnet, dass** dieser, außer dem Ausgussverschluss (5), einteilig und flexibel ausgebildet ist.

3. Deckel nach Anspruch 1 oder 2, **dadurch gekennzeichnet, dass** der erste Schenkel (10) löffelförmig ausgebildet ist, wobei
- die im Wesentlichen konvexe Unterseite (15) des Löffels im Verschlusszustand formschlüssig in der Ausgussöffnung (4) aufgenommen ist und
- die im Wesentlichen konkave Oberseite (16) des Löffels eine Löffelschale bildet.

4. Deckel nach einem der Ansprüche 1 bis 3, **dadurch gekennzeichnet, dass** um den Deckelbasisumfang (6) mindestens eine, bevorzugt drei untereinander angeordnete Dichtungslippen (17) vorhanden sind, welche unter einem Presssitz die Deckelbasis (6) im Gefäß verankern.

5. Deckel nach einem der Ansprüche 1 bis 4, **dadurch gekennzeichnet, dass die** Oberfläche (18) der Deckelbasis (3) konkav geformt ist.

6. Gefäß mit einem Deckel nach einem der vorangehenden Ansprüche.

7. Gefäß nach Anspruch 6, **dadurch gekennzeichnet, dass** es an seinem oberen Rand eine Wandstärke von wenigstens 1 Millimeter aufweist.

8. Gefäß nach Anspruch 6 oder 7, **dadurch gekennzeichnet, dass** es ein Werkzeug zum Zerkleinern eines Inhalts des Mixbechers aufweist.

9. Gefäß nach einem der Ansprüche 6 bis 8, **dadurch gekennzeichnet, dass** es einen Griff zur Handhabung des Gefäßes aufweist und der Deckel so auf dem Gefäß angebracht werden kann, dass die Ausgusskante (9) gerade gegenüberliegend von dem Griff an dem Gefäß angeordnet ist.

## Claims

1. Lid (1) for a vessel, in particular for a mixer (2), having
- at least one pouring opening (4), which is located in a lid base (3) and through which the contents of the vessel can be poured out of the vessel through the lid base (3), and
- a pouring closure (5), which is embodied to be able to be inserted into the pouring opening (4) in order to seal it off,
- the pouring opening (4) reaches the vessel rim (7), forming a closed lid base circumference (6), wherein the transition (8) from the pouring opening (4) over the closed vessel base circumference (6) forms a pouring rim (9),
**characterised in that** the pouring closure (5) is embodied as a rocker with two legs (10, 11),
- a measuring cup (13) that is open upwards and integrated into the rocker is arranged below the vertex (12) of the rocker,
- in the closed state of the lid (1), a first leg (10) covers the pouring rim (9), and
wherein
in the closed state, while forming an opening wedge (14) a second leg (1) protrudes at a height such that, by pressing on the second leg (11) protruding at the height, the rocker lifts the first leg (10), so that the pouring opening (4) is open.

2. Lid according to claim 1, **characterised in that** it is embodied in a one-piece and flexible manner, with the exception of the pouring closure (5).

3. Lid according to claim 1 or 2, **characterised in that** the first leg (10) is embodied in a spoon-shaped manner, wherein
- the substantially convex lower side (15) of the spoon is accommodated in the pouring opening (4) with a positive fit in the closed state and
- the substantially concave upper side (16) of the spoon forms a bowl of the spoon.

4. Lid according to one of claims 1 to 3, **characterised in that** present around the lid base circumference (6) are at least one, preferably three sealing lips (17) arranged one below the other, which anchor the lid base (6) in the vessel when press-fitted.

5. Lid according to one of claims 1 to 4, **characterised in that** the upper area (18) of the lid base (3) has a concave shape.

6. Vessel with a lid according to one of the preceding claims.

7. Vessel according to claim 6, **characterised in that** it has a wall thickness of at least 1 millimetre at its upper rim.

8. Vessel according to claim 6 or 7, **characterised in that** it has a tool for chopping up the contents of the mixing cup.

9. Vessel according to one of claims 6 to 8, **characterised in that** it has a grip for handling the vessel and the lid can be attached to the vessel such that the pouring rim (9) is arranged just opposite the grip on the vessel.

## Revendications

1. Couvercle (1) pour un récipient, en particulier pour un mixeur (2), comprenant :
- au moins une ouverture de bec (4) située dans une base de couvercle (3), à travers laquelle le contenu du récipient peut être versé hors du récipient à travers la base du couvercle (3), et
- une fermeture de bec (5), qui est conçue pour être insérée dans l'ouverture de bec (4) afin d'étanchéifier celle-ci,
dans lequel :
- l'ouverture de bec (4) s'étend jusqu'au bord du récipient (7) en formant une périphérie de base de couvercle (6) fermée, et la transition (8) de l'ouverture de bec (4) sur la périphérie de base de couvercle (6) fermée forme un rebord de bec (9), **caractérisé en ce que** la fermeture de bec (5) est conçue sous forme d'une bascule comportant deux branches (10, 11),
- un godet doseur (13) ouvert vers le haut et intégré dans la bascule étant disposé en dessous du point angulaire (12) de la bascule,
et dans lequel :
- une première branche (10) recouvre le rebord de bec (9) à l'état fermé du couvercle (1), et
- une seconde branche (11) fait saillie vers le haut, à l'état fermé, en formant une clavette d'ouverture (14), de telle manière qu'en exerçant une pression sur la seconde branche (11) faisant saillie vers le haut, la bascule soulève la première branche (10), de sorte que l'ouverture de bec (4) est ouverte.

2. Couvercle selon la revendication 1, **caractérisé en ce que** celui-ci, à l'exception de la fermeture de bec (5), est formé d'une seule pièce et de façon flexible.

3. Couvercle selon la revendication 1 ou 2, **caractérisé en ce que** la première branche (10) est conçue en forme de cuillère, dans lequel :
- la face inférieure (15) essentiellement convexe de la cuillère est reçue par ajustement de forme dans l'ouverture de bec (4) à l'état fermé et
- la face supérieure (16) essentiellement concave de la cuillère forme une cuvette de cuillère.

4. Couvercle selon l'une des revendications 1 à 3, **caractérisé en ce qu'**au moins une, de préférence trois lèvres d'étanchéité (17) disposées les unes en dessous des autres sont présentes autour de la périphérie de base de couvercle (6), qui ancrent la base de couvercle (6) dans le récipient sous un ajustement serré.

5. Couvercle selon l'une des revendications 1 à 4, **caractérisé en ce que** la surface (18) de la base de couvercle (3) est formée de façon concave.

6. Récipient comprenant un couvercle selon l'une des revendications précédentes.

7. Récipient selon la revendication 6, **caractérisé en ce qu'**il présente au niveau de son bord supérieur une épaisseur de paroi d'au moins 1 millimètre.

8. Récipient selon la revendication 6 ou 7, **caractérisé en ce qu'**il comprend un outil pour broyer le contenu du bol de mélange.

9. Récipient selon l'une des revendications 6 à 8, **caractérisé en ce qu'**il comprend une poignée pour manipuler le récipient, et le couvercle peut être monté sur le récipient de manière à ce que le rebord de bec (9) soit disposé juste en face de la poignée sur le récipient.
